# EUROPEAN PATENT SPECIFICATION

(11) **EP 2 111 353 B1**
(45) Date of publication and mention of the grant of the patent: **03.06.2015**
(21) Application number: 08709797.8
(22) Date of filing: 12.02.2008
(51) Int. Cl.: B62J 17/08

(54) **PROTECTING STRUCTURE**
SCHUTZSTRUKTUR
STRUCTURE DE PROTECTION

(30) Priority: 15.02.2007 IT MO20070048
(43) Date of publication of application: 28.10.2009
(73) Proprietor: IT DEV SOLUTION s.r.l., 42124 Reggio Emilia (RE) (IT)
(72) Inventor: BOMBARDA, Gian Luca, I-42011 Bagnolo in Piano (RE) (IT)
(74) Representative: Crugnola, Pietro
(86) International application number: PCT/IB2008/000309
(87) International publication number: WO 2008/099258

(56) References cited:
- EP-A- 1 186 521
- EP-A2- 1 223 100
- WO-A-85/00568
- DE-U1- 29 903 403
- DE-U1- 29 920 879
- DE-U1- 29 923 525
- FR-A- 2 882 722

## Description

The invention relates to a protecting structure for protecting users of vehicles with two or more wheels from impacts and/or falls.

In particular, the invention refers to a protecting structure for protecting users of vehicles with an electric motor from impacts and or falls.

Such electric-motor vehicles may comprise utility vehicles for transporting goods, for example mail, pizzas, work tools, or people, leisure and pleasure vehicles for personal use, or the like.

Protecting structures are known for protecting users of motor vehicles with two or more wheels comprising a tubular chassis.

The tubular chassis comprises an upper part and a lower part, to the lower part there being fixed the wheels, the motor, a handlebar or steering wheel, and a seat for the users.

The upper part extends as an arch above, and around, a zone of said vehicle intended for receiving the users, for example a driver or a driver plus possible passengers.

This upper part comprises an upper portion, or roof, a front portion and a rear portion, the upper portion being interposed between the front portion and the rear portion. The upper portion, the front portion and the rear portion are coated with a coating material, for example plastics. The upper portion bounds the zone from above that is intended for the users and serves to protect the users from atmospheric agents and from impacts in the event of the vehicle overturning.

The front portion bounds at the front the aforesaid zone and supports a windscreen for protecting, in use, users from the air, a front lamp and, laterally, a pair of rear-view mirrors.

The rear portion, which is opposite the front portion, bounds at the rear the aforesaid zone, and supports, respectively internally and externally to the zone intended for the users, a seat back and a rear lamp.

The rear portion is further laterally provided with lateral protections for protecting the users of the vehicle from lateral impacts.

A drawback of the aforesaid protecting structures is that they are not replaceable in the event of serious damage following impacts and/or falls.

This is due to the fact that such protecting structures form, and are an integral part of, the chassis of the vehicle.

This means that in the event of serious damage to the protecting structures it is not convenient to repair the vehicle, which thus has to be scrapped, with a consequent significant economical loss for the owner.

A further drawback is that such protecting structures are particularly complex and costly to make.

WO85/00568A discloses a structure for a vehicle comprising a body formed of an assembly of bent and welded steel tubes clamped to a moped or motorcycle chassis and a stabilization system consisting of retractable rollers on both sides of the vehicle.

DE29923525U1 describes a movable vending device consisting of a vehicle which is similar to a bicycle. The vehicle is provided with a protective sun roof having solar cells. Moreover, the vehicle comprises, in a front part thereof, a loading surface on which a chest freezer is provided. The chest freezer is connected electrically to the solar cells via storage battery and charge controller.

EP1186521A relates to a vehicular windshield including a wiper-wiped surface to be wiped by a wiper, and a transparent resin-made windshield main body having upper and lower mounting portions for mounting the windshield main body to a roof and a front frame of a vehicle.

DE29920879U1 discloses a wind and weather protection for a two-wheel vehicle.

FR2882722A relates to a protecting device having a pair of bows with a central part located at the right of a driver and transversely reduced on both sides to form a concave zone, where a part of the bows is provided with a pair of lateral bows.

DE-U-29903403 discloses a sunshield for motorcycles comprising a pair of front brackets mounted on the head portion of a motorcycle, a pair of rear brackets installed on the tail portion of the motorcycle, a pair of reel supporting brackets, a reel installed on the reel supporting brackets and provided with a piece of canvas. A solar energy collecting panel is arranged on the reel to convert solar energy into electric power. DE19701631A1 discloses a bicycle incorporating conventional components of a pedal cycle with solar modules fitted to a weather canopy extending over the seat and handlebars. The energy converter is provided with a buffer battery from which current is supplied to a front-wheel hub motor via a controller when the vehicle is in motion.

An object of the invention is to improve the protecting structures for protecting users of vehicles with two or more wheels.

A further object is to provide protecting structures that are easily replaceable in the event of damage.

A still further object is to obtain protecting structures that are easy and cheap to make.

According to the invention, a protecting structure is provided as defined in claim 1.

Owing to this aspect of the invention it is possible to provide protecting structures that are easily replaceable in the event of damage.

In fact, said protecting structure is separated from said chassis and is removably fixable to the chassis by said fixing means.

This enables, and makes it economical, in the event of serious damage to said protecting structure, to repair said vehicle by simply replacing said damaged protecting structure with another undamaged protecting structure. Further, owing to said fixing means, for example comprising threaded elements, it is possible to rapidly mount/dismantle said structure from said vehicle.

Still, said protecting structure is particularly flexible, inasmuch as with a few modifications it can be fixed to a plurality of chassis of vehicles with two or more wheels. The invention can be better understood and implemented with reference to the attached drawings that illustrate an embodiment thereof by way of non-limiting example, in which:
Figure 1 is a side view of a protecting structure;
Figure 2 is a side view of a three-wheeler vehicle with an electric motor;
Figure 3 is a side view of the protecting structure in

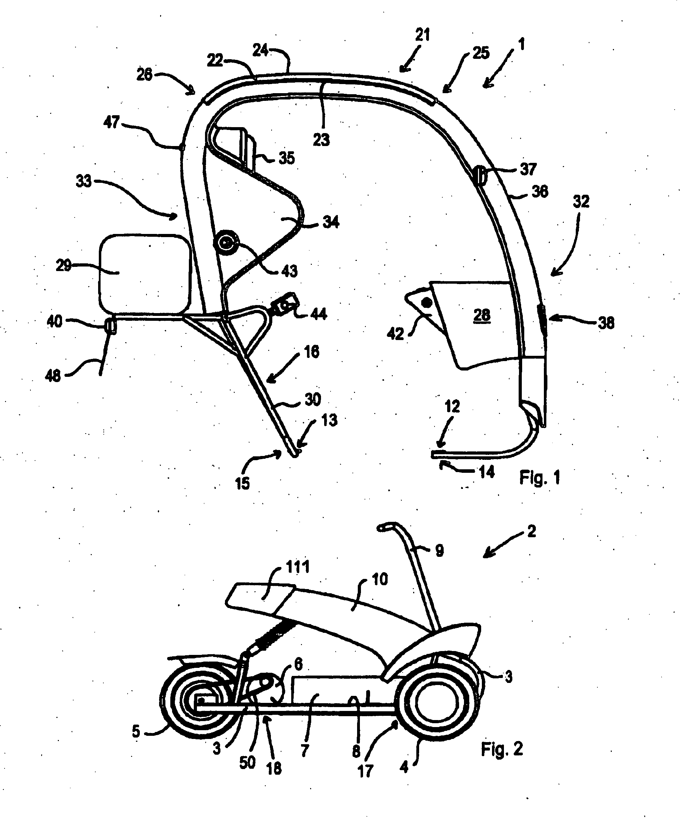

Figure 1 mounted on the vehicle in Figure 2;

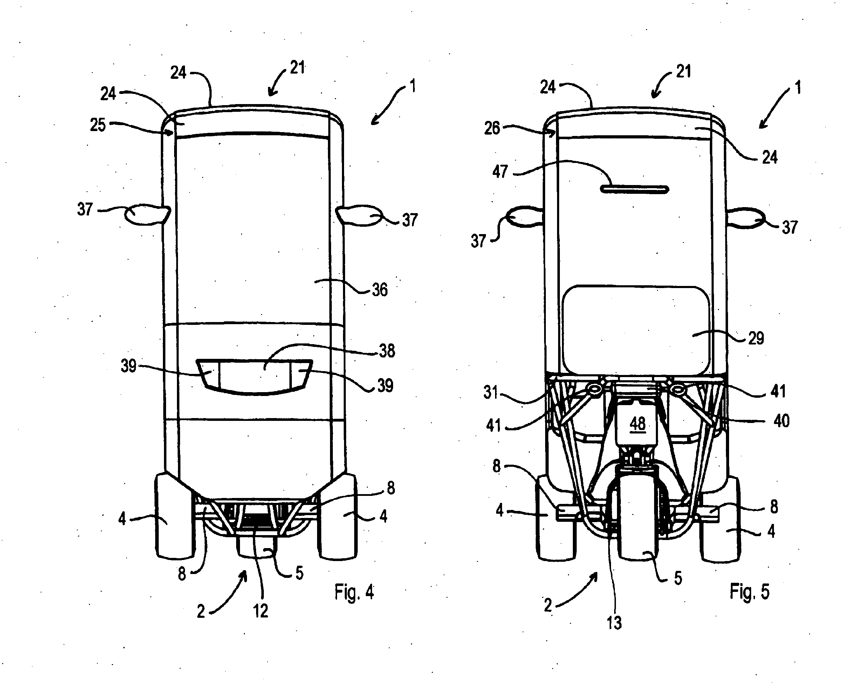

Figure 4 is a front view of the protecting structure in
Figure 1 mounted on the vehicle in Figure 2;
Figure 5 is a rear view of the protecting structure in
Figure 1 mounted on the vehicle in Figure 2;

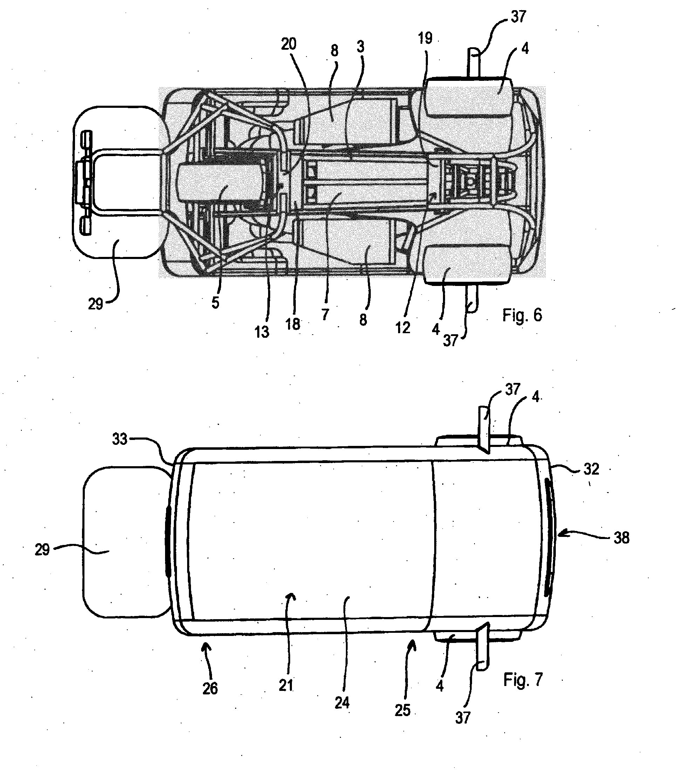

Figure 6 is a bottom view of the protecting structure in
Figure 1 mounted on the vehicle in Figure 2;
Figure 7 is a top view of the protecting structure in Figure 1 mounted on the vehicle in Figure 2.

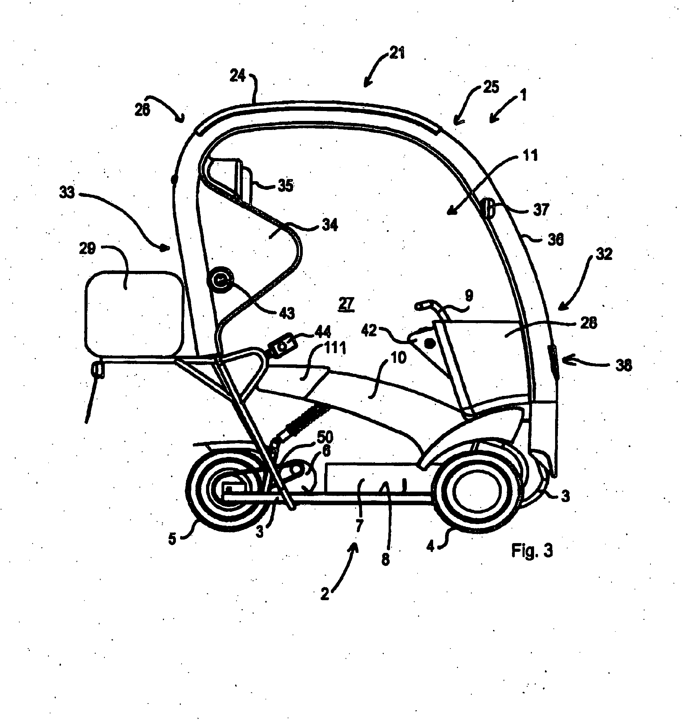

With reference to Figures 1 to 7 there is shown a protecting structure 1 for protecting from impacts and/or falls a user, who is not shown, of a vehicle 2 with an electric motor.

The vehicle 2 can be used both as a working vehicle for conveying goods and/or people and as a pleasure and leisure vehicle.

The vehicle 2 comprises a chassis 3 supporting two steering and cushioned front wheels 4, a rear driving wheel 5, a handlebar 9 for steering the front wheels 4, a cushioned arm element 10, at an end of which there is mounted a seat 111, and two footboards 8, positioned opposite the arm element 10.

The chassis 3 further supports an electric motor 6 connected by a chain 50, or a belt, to the rear wheel 5 and supplied electrically by one or more batteries 7 positioned on the chassis 3 between the footboards 8.

The protecting structure 1 extends substantially as an arch above, and around, a zone 11 intended for receiving the user, or the users, and is fixed to the chassis 3 by fixing elements 12, 13.

The fixing elements 12, 13 are positioned near respective end portions 14, 15, of a framework 16, for example a tubular framework, of the protecting structure 1, the framework 16 comprising upright elements 30 extending substantially as an arch and crosspiece elements 31 extending transversely to the aforesaid upright elements 30. The fixing elements 12, 13 are arranged for fixing the aforesaid end portions 14, 15 to respective fixing portions 17, 18, for example bottom portions, of the chassis 3.

In an embodiment of the invention, which is not shown, the fixing portions 17, 18, comprise upper and/or front and/or rear portions of the chassis 3.

The fixing elements 12, 13 comprise respective plates 19, 20 that are fixable to the respective fixing portions 17, 18 by screws, or welding, or gluing or similar.

The protecting structure 1 further comprises a plurality of photovoltaic cells 21 arranged for supplying electric energy to the batteries 7, in order to increase the endurance of the electric motor 6. The photovoltaic cells 21 are mounted on a panel 22 fixed in a removable manner to an upper portion 23 of the framework 16.

This enables the photovoltaic cells 21 to be removed from the protecting structure 1 rapidly and simply in the event of a fault or damage to the photovoltaic cells.

The upper portion 23 comprises a curved supporting surface, which is not shown, arranged for supporting the panel 22, extending between a first zone 25 and a second zone 26 of the framework 16 respectively front and rear with respect to a driving position 27 of the user.

This enables the upper portion 23 to be shaped such that a surface 24 of the photovoltaic cells 21 is maximised that is available for irradiation and a certain quantity of photovoltaic cells 21 is always present and orientated in an optimal manner for receiving solar radiation.

In an embodiment of the invention, which is not shown, the upper portion 23 comprises a substantially flat surface.

In a still further embodiment of the invention, which is not shown, the upper portion 23 comprises at least a curved surface and at least a flat surface.

The protecting structure 1 further comprises a first container 28 and a second container 29 for containing objects that the user desires to convey, such as for example mail, pizzas, work tools and the like.

The first container 28 and the second container 29 are fixed respectively to a front portion 32 and to a rear portion 33 of the framework 16, respectively inside and outside the zone 11 intended for the user, the first container 28 being interposed between the handlebar 9 and the front portion 32. In an embodiment of the invention, which is not shown, the first container 28 and the second container 29 are fixed respectively to a front portion 32 and to a rear portion 33 of the framework 16, both inside or outside, or respectively outside and inside, the zone 11.

The protecting structure 1 further comprises lateral protecting elements 34 positioned laterally with respect to the zone 11 for protecting the user from lateral impacts. The lateral protecting elements 34 project from the rear portion 33 towards the front portion 32 on opposite sides with respect to a seat back 35, fixed to the rear portion 33 inside the zone 11.

The protecting structure 1 further comprises a windscreen 36 positioned in the front portion 32 for protecting the users from the wind and from atmospheric agents.

In an embodiment of the invention, which is not shown, there are provided further photovoltaic cells positioned on the front portion 32 on opposite sides with respect to the windscreen 36.

To the side of the front portion 32 there are further fixed two rear-view mirrors 37 to enable a driver to look behind without turning round.

The protecting structure 1 further comprises a first lamp 38 and first direction indicators 39 fixed to the front portion 32, for example below the windscreen 36.

The protecting structure 1 is further provided with a second lamp 40, with second direction indicators 41, with a luminous braking indicator 47 and with a licence plate holder 48 fixed to the rear portion 33.

In particular, the second lamp 40, the second direction indicators 41 and the licence plate holder 48 are positioned below the second container 29, whilst the luminous braking indicator 47 is positioned above the second container 29.

In an embodiment of the invention, which is not shown, the protecting structure 1 comprises an opening obtained in the rear portion 33, suitably shaped to enable the user to see behind and laterally.

In a further embodiment of the invention, which is not shown, the aforesaid opening is closed by a transparent material.

The protecting structure 1 further comprises switching-on/switching-off means, which is not shown, for switching-on/switching-off the vehicle 2 positioned inside the zone 11 and fixed to a support 42 mounted on the first container 28. The protecting structure 1 is further provided with indicating means for indicating a charge level of the batteries 7, which is not shown, positioned inside the zone 11 and fixed to the support 42.

The protecting structure 1 further comprises speed adjusting means, which is not shown, for adjusting a speed value of the vehicle 2, and travel switching means, which is not shown, for switching a travel direction of the vehicle 2, also positioned inside the zone 11 and fixed to the support 42.

Further, the protecting structure 1 is provided with electric plug means 43 for electrically connecting the batteries 7 to an electric energy supply network, which is not shown, such electric plug means 43 are fixed to, and unwindable from, the lateral protecting elements 34.

Lastly, the protecting structure 1 comprises seat belts, which are not shown, to retain the user inside the zone 11, fixed to, and unwindable from, the rear portion 33, inside the zone 11, arranged for being fixed to respective elements 44 positioned laterally with respect to the zone 11.

It should be noted how the protecting structure 1 is easily replaceable in the event of damage.

In fact, it is sufficient to unscrew the fixing screws to remove the protecting structure 1 from the chassis 3 of the vehicle 2.

In the event of serious damage to the protecting structure 1, this makes it economical to repair the vehicle 2, simply replacing the damaged protecting structure 1 with another undamaged protecting structure.

Further, the protecting structure 1 is particularly flexible, inasmuch as with few modifications it can be fixed on a plurality of chassis of vehicles with two or more wheels.

## Claims

1. Protecting structure for protecting from impacts and/or falls a user of a vehicle (2) with two or more wheels, said protecting structure (1) extending substantially as an arch above, and around, a zone (11) intended for receiving said user, and being provided with fixing means (12, 13) for fixing said protecting structure (1) to a chassis (3) of said vehicle (2), said fixing means comprising fixing elements (12, 13) positioned near respective end portions (14, 15) of a framework (16) of said structure (1) for fixing said end portions (14, 15) to respective fixing portions (17, 18) of said chassis (3), said protecting structure (1) further comprising lateral protecting means (34) positioned laterally with respect to said zone (11) to protect said user from side impacts, **characterised in that** said protecting structure (1) is provided with photovoltaic cell means (21) for supplying electric energy to a battery (7) of an electric motor (6) of said vehicle (2), said photovoltaic cell means (21) being positioned on an upper portion (23) of said framework (16), said upper portion (23) being shaped so as to maximise a surface (24) of said photovoltaic cell means (21) available for irradiation, and with panel means (22) that is fixable in a removable manner to said upper portion (23) and is arranged for supporting said photovoltaic cell means (21), and comprising electric plug means (43) for connecting said battery (7) to an electric energy supply network fixed to, and unwindable from, said lateral protecting means (34).

2. Structure according to claim 1, wherein said fixing portions are bottom portions (17, 18) of said chassis (3).

3. Structure according to claim 1, or 2, wherein said upper portion (23) is shaped so as to favour said irradiation of said photovoltaic cell means (21).

4. Structure according to any preceding claim, wherein said upper portion (23) extends between a first zone (25) and a second zone (26) of said framework (16) respectively front and rear with respect to a guiding position (27) of said user.

5. Structure according to any preceding claim, wherein said upper portion (23) comprises a substantially curved surface or a substantially flat surface.

6. Structure according to any preceding claim, wherein said framework (16) is a tubular framework.

7. Structure according to claim 6, wherein said tubular framework comprises upright means (30) shaped substantially as arches and crosspiece means (31) extending transversely to said upright means (30).

8. Structure according to any preceding claims, wherein said lateral protecting means (34) projects from a rear portion (33) of said framework (16) towards a front portion (32) of said framework (16).

9. Structure according to claim 8, and comprising windscreen means (36) positioned in said front portion (32).

10. Structure according to any preceding claim, and comprising indicating means for indicating a charge level of said battery (7), said indicating means being positioned inside said zone (11) and fixed to a support (42).

11. Structure according to claim 10, and comprising travel switching means for switching a travel direction of said vehicle (2), said switching means being positioned inside said zone (11) and fixed to said support (42).

12. Structure according to any one of claims 8 to 11, as claims 10 is appended to claim 8, and comprising seatbelt means positioned inside said zone (11) to retain said user inside said zone (11) and fixed to said rear portion (33).

13. Combination of a protecting structure (1) as claimed in any one of claims 1 to 12 and of a vehicle (2) with an electric motor (6) provided with two front steering wheels (4) and with a rear driving wheel (5).

## Patentansprüche

1. Schutzstruktur zum Schützen eines Benutzers eines Vehikels (2) mit zwei oder mehreren Rädern vor Einwirkungen und/oder Stürzen, wobei sich die Schutzstruktur (1) im Wesentlichen als ein Bogen oberhalb eines Bereichs (11) und um diesen herum erstreckt, der zur Aufnahme des Benutzers vorgesehen ist, und mit Befestigungsmitteln (12, 13) zum Befestigen der Schutzstruktur (1) an ein Chassis (3) des Vehikels (2) versehen ist, wobei die Befestigungsmittel Befestigungselemente (12, 13) aufweisen, die in der Nähe von entsprechenden Endteilen (14, 15) eines Rahmens (16) der Struktur (1) positioniert sind, um die Endteile (14, 15) an jeweilige Befestigungsteile (17, 18) des Chassis (3) zu befestigen, wobei die Schutzstruktur (1) ferner seitliche Schutzmittel (34) aufweist, die seitlich in Bezug auf den Bereich (11) positioniert sind, um den Benutzer vor seitlichen Einwirkungen zu schützen, **dadurch gekennzeichnet, dass** die Schutzstruktur (1) mit photovoltaischen Zellmitteln (21) versehen ist, um elektrische Energie an eine Batterie (7) eines elektrischen Motors (6) des Vehikels (2) zu liefern, wobei die photovoltaischen Zellmittel (21) an einem oberen Teil (23) des Rahmens (16) positioniert sind, wobei der obere Teil (23) derart geformt ist, um eine Fläche (24) der photovoltaischen Zellmittel (21), der für eine Bestrahlung verfügbar ist, zu maximieren, und mit Paneelenmitteln (22) versehen ist, die in einer lösbaren Weise an den oberen Teil (23) befestigbar sind und ausgebildet sind, um die photovoltaischen Zellmittel (21) zu tragen, und elektrische Steckmittel (43) aufweist, um die Batterie (7) mit einem elektrischen Energieversorgungsnetzwerk zu verbinden, die an den seitlichen Schutzmitteln (34) befestigt und von diesen abwickelbar sind.

2. Struktur gemäß Anspruch 1, wobei die Befestigungsteile Bodenteile (17, 18) des Chassis (3) sind.

3. Struktur gemäß Anspruch 1 oder 2, wobei der obere Teil derart geformt ist, um die Bestrahlung der photovoltaischen Zellmittel (21) zu begünstigen.

4. Struktur gemäß einem der vorherigen Ansprüche, wobei sich der obere Teil (23) zwischen einem ersten Bereich (25) und einem zweiten Bereich (26) des Rahmens (16) bzw. vorne und hinten in Bezug auf eine Lenkposition (27) des Benutzers erstreckt.

5. Struktur gemäß einem der vorherigen Ansprüche, wobei der obere Teil (23) eine im Wesentlichen gekrümmte Fläche oder eine im Wesentlichen ebene Fläche aufweist.

6. Struktur gemäß einem der vorherigen Ansprüche, wobei der Rahmen (16) ein röhrenförmiger Rahmen ist.

7. Struktur gemäß Anspruch 6, wobei der röhrenförmige Rahmen Senkrechtmittel (30) aufweist, die im Wesentlichen bogenförmig sind, und Quermittel (31) aufweist, die sich quer zu den Senkrechtmitteln (30) erstrecken.

8. Struktur gemäß einem der vorherigen Ansprüche, wobei die seitlichen Schutzmittel (34) von einer hinteren Position (33) des Rahmens (16) in Richtung einer vorderen Position (32) des Rahmens (16) vorstehen.

9. Struktur gemäß Anspruch 8, die ferner Windschutzmittel (36) aufweist, die in dem vorderen Teil (32) positioniert sind.

10. Struktur gemäß einem der vorherigen Ansprüche, die ferner Anzeigemittel zum Anzeigen eines Ladeniveaus der Batterie (7) aufweist, wobei die Anzeigemittel im Inneren des Bereichs (11) positioniert und an einem Träger (42) befestigt sind.

11. Struktur gemäß Anspruch 10, die ferner Fahrtschaltmittel zum Schalten einer Fahrtrichtung des Vehikels (2) aufweist, wobei die Schaltmittel im Inneren des Bereichs (10) positioniert und an dem Träger (42) befestigt sind.

12. Struktur gemäß einem der Ansprüche 8 bis 11, sofern sich Anspruch 10 auf Anspruch 8 bezieht, die ferner Sitzgurtmittel aufweist, die im Inneren des Bereichs (10) positioniert sind, um den Benutzer im Inneren des Bereichs (10) zurückzuhalten und in der hinteren Position (33) zu fixieren.

13. Kombination aus einer Schutzstruktur (1) wie in einem der Ansprüche 1 bis 12 beansprucht, und einem Vehikel (2) mit einem elektrischen Motor (3), das mit zwei vorderen Lenkrädern (4) und mit einem hinteren Antriebsrad (5) versehen ist.

## Revendications

1. Structure de protection pour protéger contre des impacts et/ou des chutes un utilisateur d'un véhicule (2) à deux ou plusieurs roues, ladite structure de protection (1) s'étendant sensiblement, sous la forme d'un arceau, au-dessus et autour d'une zone (11) destinée à recevoir ledit utilisateur, et étant prévue avec des moyens de fixation (12, 13) pour fixer ladite structure de protection (1) à un châssis (3) dudit véhicule (2), lesdits moyens de fixation comprenant des éléments de fixation (12, 13) mis en place au voisinage de parties terminales (14, 15) respectives d'une armature (16) de ladite structure (1) pour fixer lesdites parties terminales (14, 15) à des parties de fixation (17, 18) respectives dudit châssis (3), ladite structure de protection (1) comprenant en outre des moyens de protection latéraux (34) mis en place latéralement par rapport à ladite zone (11) pour protéger ledit utilisateur contre des impacts latéraux, **caractérisée en ce que** ladite structure de protection (1) est équipée de moyens de cellule photovoltaïque (21) pour fournir de l'énergie électrique à une batterie (7) d'un moteur électrique (6) dudit véhicule (2), lesdits moyens de cellule photovoltaïque (21) étant mis en place sur une partie supérieure (23) de ladite armature (16) et ladite partie supérieure (23) ayant une forme apte à rendre maximale une surface (24) desdits moyens de cellule photovoltaïque (21) qui est disponible en vue d'une irradiation, et est dotée de moyens de panneau (22) qui peuvent être fixés de manière démontable à ladite partie supérieure (23) et qui sont organisés pour supporter lesdits moyens de cellule photovoltaïque (21), en comprenant aussi des moyens d'enfichage électrique (43) pour connecter ladite batterie (7) à un réseau d'alimentation en énergie électrique fixé auxdits moyens de protection latéraux (34), et pouvant être déployés à partir de ces derniers.

2. Structure selon la revendication 1, dans laquelle lesdites parties de fixation sont des parties de fond (17, 18) dudit châssis (3).

3. Structure selon la revendication 1 ou 2, dans laquelle ladite partie supérieure (23) a une forme apte à favoriser ladite irradiation desdits moyens de cellule photovoltaïque (21).

4. Structure selon une quelconque revendication précédente, dans laquelle ladite partie supérieure (23) s'étend entre une première zone (25) et une deuxième zone (26) de ladite armature (16) situées respectivement à l'avant et à l'arrière par rapport à une position de guidage (27) occupée par ledit utilisateur.

5. Structure selon une quelconque revendication précédente, dans laquelle ladite partie supérieure (23) comprend une surface essentiellement incurvée ou une surface essentiellement plane.

6. Structure selon une quelconque revendication précédente, dans laquelle ladite armature (16) est une armature tubulaire.

7. Structure selon la revendication 6, dans laquelle ladite armature tubulaire comprend des moyens de montants (30) ayant essentiellement une forme d'arceaux et des moyens de traverse (31) s'étendant transversalement par rapport auxdits moyens de montants (30).

8. Structure selon l'une quelconque des revendications précédentes, dans laquelle lesdits moyens de protection latéraux (34) sont en saillie à partir d'une partie arrière (33) de ladite armature (16) vers une partie avant (32) de ladite armature (16).

9. Structure selon la revendication 8, et comprenant des moyens de pare-brise (36) mis en place dans ladite partie avant (32).

10. Structure selon une quelconque revendication précédente, et comprenant des moyens d'indication pour indiquer un niveau de charge de ladite batterie (7), lesdits moyens d'indication étant mis en place à l'intérieur de ladite zone (11) et fixés à un support (42).

11. Structure selon la revendication 10, et comprenant des moyens de commutation de déplacement pour commuter sur une autre direction de déplacement dudit véhicule (2), lesdits moyens de commutation étant mis en place à l'intérieur de ladite zone (11) et fixés audit support (42).

12. Structure selon l'une quelconque des revendications 8 à 11, avec la revendication 10 qui dépend de la revendication 8, et comprenant des moyens de ceinture de sécurité mis en place à l'intérieur de ladite zone (11) pour maintenir ledit utilisateur à l'intérieur de ladite zone (11) et fixés à ladite partie arrière (33).

13. Combinaison d'une structure de protection (1) telle que revendiquée dans l'une quelconque des revendications 1 à 12 et d'un véhicule (2) équipé d'un moteur électrique (6) et prévu avec deux roues directrices avant (4) et avec une roue arrière d'entraînement (5).
